(19) Europäisches Patentamt
European Patent Office
Office européen des brevets

(11) EP 1 088 867 A1

(12) **EUROPÄISCHE PATENTANMELDUNG**

(43) Veröffentlichungstag:
**04.04.2001 Patentblatt 2001/14**

(51) Int Cl.[7]: **C09D 167/00**, C08L 67/00

(21) Anmeldenummer: **99119417.6**

(22) Anmeldetag: **30.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ciba Spezialitätenchemie Pfersee GmbH
86462 Langweid a.L. (DE)**

(72) Erfinder:
- **Dirschl, Franz, Dr.
86153 Ausburg (DE)**
- **Lüdemann, Simpert
86399 Bobingen (DE)**
- **Schidek, Edeltraud
86199 Ausburg (DE)**
- **Artner, Wilhelm
86568 Motzenhofen (DE)**
- **Gaugenrieder, Heinz
86441 Zusmarshausen (DE)**

(54) **Zusammensetzungen für die öl- und wasserabweisende Ausrüstung von Fasermaterialien**

(57) Zusammensetzungen, welche einen Ester mit Perfluoralkylgruppen und ein Oligo- oder Polyurethan, in dem ebenfalls Perfluoralkylgruppen vorliegen können, enthalten, eignen sich für die öl- und wasserabweisende Ausrüstung von flächenhaften Textilmaterialien. Die Zusammensetzungen können zusätzlich Acrylpolymere mit Perfluoralkylgruppen und Extender enthalten. Vor allem die Verwendung von nichtionogenen wäßrigen Dispersionen der Zusammensetzungen ermöglicht es, Textilien zu erhalten, welche nur geringe Effekteinbußen nach mechanischem Abrieb und gute LAD-Effekte aufweisen.



Printed by Jouve, 75001 PARIS (FR)

## Beschreibung

Die Erfindung betrifft eine Zusammensetzung, die einen fluorhaltigen Ester und ein Oligourethan oder ein Polyurethan enthält. Sie betrifft ferner ein besonders vorteilhaftes Verfahren zur Herstellung wäßriger Dispersionen solcher Zusammensetzungen und die Verwendung solcher Zusammensetzungen zur Behandlung von Fasermaterialien.

Es ist bekannt Fasermaterialien, insbesondere Gebrauchstextilien in Form von Flächengebilden, dadurch öl- und wasserabweisend auszurüsten, daß man auf sie Polymere aufbringt, welche Fluor enthalten. Vielfach werden hierbei Polymere, welche perfluorierte Reste ($R_F$) enthalten, in Form wäßriger Dispersionen auf die Textilien aufgebracht. Als Polymere kommen hierbei unter anderem Acrylat-Homo- oder Copolymere, Polyurethane und Polyester in Frage, welche Reste $R_F$ enthalten.

Die Verwendung von $R_F$ enthaltenden Acrylaten für die Behandlung von Textilien ist beispielsweise beschrieben in der US-A 4 742 140, der US-A 5 725 789 und der US-A 3 491 169. Die Verwendung von $R_F$ enthaltenden Polyurethanen geht aus der US-A 5 019 428 hervor. Gemäß US-A 3 923 715 werden Gemische aus einem $R_F$ enthaltenden Ester und einem nichtfluorierten Vinylpolymeren verwendet. Die EP-A 208 421 beschreibt ebenfalls Gemische für die öl- und wasserabweisende Ausrüstung von Textilien. Die WO 95/33093 behandelt die Ausrüstung von Textilien mittels fluorierter Verbindungen und Extendern. Schließlich gehen aus der US-A 4 264 484 und der US-A 4 401 780 ebenfalls Gemische hervor, die fluorierte Anteile enthalten und sich für die Behandlung textiler Flächengebilde eignen.

Die aus dem Stand der Technik bekannten Zusammensetzungen besitzen noch nicht optimale Eigenschaften im Hinblick auf die öl- und wasserabweisende Ausrüstung von Textilmaterialien. So ist einerseits die Stabilität wäßriger Dispersionen einer Reihe solcher Zusammensetzungen unbefriedigend. Dies ist ein Nachteil, weil die Verwendung von Zusammensetzungen für die Textilbehandlung in Form wäßriger Dispersionen die technisch und ökonomisch günstigste Methode darstellt. Außerdem wird in einer Reihe von Fällen das gewünschte Effektniveau nicht oder nur mit hohen Produktauflagen auf dem Textil erreicht. Ferner ist vielfach der Nachteil festzustellen, daß ausgerüstete Textilien einen zu starken Effektverlust nach Abriebvorgängen aufweisen. Hierunter ist in diesem Zusammenhang zu verstehen, daß beim Gebrauch bzw. bei mechanischer Beanspruchung der Textilien ein mehr oder minder großer Anteil der auf der Oberfläche befindlichen Ausrüstungsprodukte durch Abrieb entfernt wird, wodurch die Permanenz der Ausrüstungseffekte verschlechtert wird.

Der vorliegenden Erfindung lag die Aufgabe zugrunde, eine Zusammensetzung für die hocheffektive öl- und wasserabweisende Ausrüstung von Fasermaterialien zur Verfügung zu stellen, die sich in Form sehr stabiler wäßriger Dispersionen erhalten läßt und die zu keiner oder nur zu geringer Effektverschlechterung auf den damit ausgerüsteten Fasermaterialien nach Abriebvorgängen führt.

Die Aufgabe wurde gelöst durch eine Zusammensetzung, welche eine Komponente A und eine Komponente B enthält, wobei Komponente A ein Ester ist, der erhältlich ist durch Umsetzung einer Dicarbonsäure oder eines Gemischs von Dicarbonsäuren der Formel (I)

$$HOOC{-}(CH\,R)_a{-}COOH \qquad (I)$$

mit einem Diol oder einem Gemisch von Diolen der Formel (II), (III), (IV), (V) und/oder (VI)

$$[\,R_F{-}(CH_2)_b{-}(X{-}CH_2)_c\,]_2\ C(CH_2OH)_2 \qquad (II)$$

$$HO{-}CH_2{-}CRR'{-}(X)_d{-}CRR'{-}CH_2OH \qquad (III)$$

$$HO{-}(CH_2)_e{-}(SiR_2{-}O)_f{-}SiR_2{-}(CH_2)_e{-}OH \qquad (IV)$$

$$HO{-}CH_2CH_2{-}N\,R''{-}CH_2CH_2OH \qquad (V)$$

$$HO{-}(CHR)_t{-}(CHR{-}CHR{-}O)_g{-}CHR{-}CHR{-}OH \qquad (VI)$$

wobei mindestens ein Diol der Formel (II) oder der Formel (III) an der Umsetzung beteiligt ist, und wobei Komponente

B ein Oligourethan oder ein Polyurethan ist, das erhältlich ist durch Umsetzung eines Diols oder Diolgemischs der Formel (II), (III), (IV), (V), (VI) oder (VII)

$$(HO\text{-}CH_2)_3\ C\text{-}CH_2\text{-}CH_3 \qquad (VII)$$

mit einem Diisocyanat oder einem Gemisch von Diisocyanaten der Formel (VIII)

$$OCN\text{-}R'''\text{-}NCO \qquad (VIII)$$

wobei alle Reste R unabhängig voneinander für Wasserstoff oder einen Alkylrest mit 1 bis 4 C-Atomen stehen,

- a für eine Zahl von 2 bis 10, vorzugsweise von 2 bis 6,
- b für eine Zahl von 1 bis 4,
- c für 0 oder 1,
- d für 0 oder 1,
- $R_F$ für $CF_3(CF_2)_h$,
- h für eine Zahl von 3 bis 15, vorzugsweise von 7 bis 11,
- R' für $(CH_2)_b\ R_F$ steht, wenn d=1 ist und für $-X(CH_2)_b\ R_F$ steht, wenn d=0 ist,
- e für eine Zahl von 1 bis 4,
- f für eine Zahl von 10 bis 50,
- g für eine Zahl von 0 bis 6,
- t für eine Zahl von 0 bis 8,
- X für -O-, -S-, -NR- oder -PR-, vorzugsweise für -S-,
- R" für R oder $-CH_2CH_2OH$ und
- R''' für einen zweiwertigen aliphatischen oder cycloaliphatischen Rest mit 4 bis 40 C-Atomen steht oder für einen zweiwertigen aromatischen Rest der Formel

$$-C_6H_3(R)\text{- oder -}C_6H_3(R)\text{-}CH_2\text{-}C_6H_3(R)\text{-}$$

wobei $C_6H_3$ für den dreiwertigen, von Benzol abgeleiteten Rest steht, wobei für den Fall, daß das Umsetzungsprodukt aus Diol und Diisocyanat noch Isocyanatgruppen enthält, diese Isocyanatgruppen gegebenenfalls blokkiert werden.

Erfindungsgemäße Zusammensetzungen eignen sich in hervorragender Weise für die Behandlung von Fasermaterialien, insbesondere von textilen Flächengebilden wie z.B. Geweben für Möbelbezugsstoffe. Die Fasermaterialien sind hierbei bevorzugt textile Flächengebilde, die zu 50 bis 100 Gew% aus synthetischen Polymeren, insbesondere Polyester, Polyacrylnitril oder Polyamid oder Gemischen hiervon bestehen und zu 0 bis 50 Gew% aus nativen Fasern, insbesondere aus Cellulose. Den Flächengebilden werden hierdurch öl- und wasserabweisende Eigenschaften verliehen. Ein besonderer Vorteil der Verwendung erfindungsgemäßer Zusammensetzungen liegt darin, daß die ausgerüsteten Fasermaterialien keine oder nur geringe Tendenz zur Verschlechterung der öl- und wasserabweisenden Effekte nach mechanischen Abriebvorgängen aufweisen.

Erfindungsgemäße Zusammensetzungen werden bevorzugt in Form wäßriger Dispersionen eingesetzt. Eine bevorzugte Ausführungsform besteht also darin, daß sie neben den Komponenen A und B noch Wasser und einen oder mehrere Dispergatoren enthalten. Vorzugsweise enthalten sie mindestens einen nichtionogenen Dispergator oder ein Gemisch nichtionogener Dispergatoren. Daneben ist es in einzelnen Fällen möglich, daß sie noch einen anionischen, kationischen oder amphoteren Dispergator enthalten.

Erfindungsgemäße Zusammensetzungen enthalten mindestens eine Komponente A und eine Komponente B. Komponente A ist ein Ester, der erhalten werden kann durch Umsetzung einer Dicarbonsäure oder eines Gemischs von Dicarbonsäuren der Formel (I)

$$HOOC\text{-}(CH\,R)_a\text{-}COOH \qquad (I)$$

mit einem Diol oder einem Gemisch von Diolen der Formel (II), (III), (IV), (V) oder (VI)

$$[R_F\text{-}(CH_2)_b\text{-}(X\text{-}CH_2)_c]_2\ C(CH_2OH)_2 \qquad (II)$$

$$HO\text{-}CH_2\text{-}CRR'\text{-}(X)_d\text{-}CRR'\text{-}CH_2OH \qquad (III)$$

$$HO\text{-}CH_2CH_2\text{-}N\ R''\text{-}CH_2CH_2OH \qquad (V)$$

$$HO\text{-}CH_2CH_2\text{-}N\ R''\text{-}CH_2CH_2OH \qquad (V)$$

$$HO\text{-}(CHR)_f\text{-}(CHR\text{-}CHR\text{-}O)_g\text{-}CHR\text{-}CHR\text{-}OH \qquad (VI)$$

Verwendet man ein Gemisch von Dicarbonsäuren und/oder ein Gemisch von Diolen, so ist Komponente A natürlich nicht ein einzelner Ester, sondern ein Gemisch von Estern. An der Umsetzung mit der Dicarbonsäure der Formel (I) muß mindestens ein Diol der Formel (II) oder Formel (III) beteiligt sein. Diole der Formeln (IV), (V) und/oder (VI) können zusätzlich an der Umsetzung beteiligt sein.

Unter Diolen im Zusammenhang mit der Erfindung (Komponente A, Komponente B) werden Verbindungen verstanden, welche einer der Formeln (II) bis (VII) entsprechen. Verbindungen, welche unter eine dieser Formeln fallen, sind Diole im Sinne der Erfindung, selbst wenn sie mehr als zwei alkoholische Hydroxylgruppen enthalten, also im streng chemischen Sinn keine Diole sind. Beispiele für solche "Diole" sind Triethanolamin (Formel (V) mit R" = $-CH_2CH_2OH$), und 1,1,1-Trimethylolpropan (Formel (VII)).

Dicarbonsäuren, welche zur Herstellung der Komponente A verwendet werden können, fallen unter die oben genannte Formel (I). Hierin bedeutet a eine Zahl von 2 bis 10, vorzugsweise von 2 bis 6. R steht für Wasserstoff oder einen Alkylrest mit 1 bis 4 Kohlenstoffatomen. Besonders gute Ergebnisse lassen sich erhalten, wenn man als Dicarbonsäure Adipinsäure (R=H, a=4) verwendet.

Die Diole bzw. Diolgemische, welche als Ausgangsverbindungen zur Herstellung der Ester (Komponente A) dienen können, entsprechen einer oder mehreren der Formeln (II) bis (VI). Mindestens ein Diol der Formel (II) oder (III) muß verwendet werden. Dies führt dazu, daß Komponente A mindestens zum Teil aus Estern besteht, welche perfluorierte Reste $R_F$ enthalten. Als Diole der Formel (II) sind solche bevorzugt, in denen X für -S- steht, b=2, c=1 ist und $R_F$ für einen unverzweigten Perfluoralkylrest mit 8 bis 12 C-Atomen steht. Die Herstellung solcher Diole ist in der EP-A 348 350 beschrieben. Besonders geeignet als Komponente A sind Ester, die sich ausgehend von Adipinsäure und den oben genannten bevorzugten Diolen der Formel (II) erhalten lassen, insbesondere Diolen der Formel (II), bei denen b=2, c=1, X= -S- und $R_F = CF_3(CF_2)_h$, wobei h für die einzelnen Diole des Gemischs Werte von 7 bis 11 besitzt. Gut geeignet sind auch Ester, zu deren Herstellung Adipinsäure mit einem Gemisch aus Diolen der Formel (II) und der Formel (IV), (V) und/oder (VI) umgesetzt wird. Die Herstellung dieser Ester und anderer Ester, die als Komponente A einsetzbar sind, kann nach allgemein bekannten chemischen Methoden erfolgen, z.B. durch Veresterung bzw. Kondensation der Dicarbonsäure mit Diol oder durch Umesterung mit Diol unter Säurekatalyse, ggf. in Gegenwart eines organischen Lösungsmittels. Als Lösungsmittel geeignet sind Ketone.

Unter den Diolen der Formel (III) sind solche besonders gut geeignet, in denen R für H und X für -S- steht und d=1 ist. In diesem Fall steht R' für $(CH_2)_b\ R_F$, wobei b für eine Zahl von 1 bis 4, vorzugsweise für 1 steht und $R_F$ ein perfluorierter linearer Alkylrest mit 4 bis 16, vorzugsweise 8 bis 12 C-Atomen, ist. Gut geeignet sind auch Diole der Formel (III) bei denen d=0 ist. in diesem Fall steht R' für $-X\ (CH_2)_b\ R_F$. X steht wieder vorzugsweise für -S- und b und $R_F$ besitzen die oben genannten Bedeutungen, wobei b in diesem Fall jedoch bevorzugt für die Zahl 2 steht. Unter den Diolen der Formel (IV) sind solche bevorzugt, bei denen e eine Zahl von 1 bis 3 und alle Reste $R=CH_3$ sind. Diole der Formel (IV), bei denen R=H ist, sind weniger bevorzugt, insbesondere stehen in Einheiten $-SiR_2-$ der Formel IV niemals beide Reste R für Wasserstoff. Unter den Diolen der Formel (V) sind Diethanolamin, Triethanolamin und N-Methyldiethanolamin besonders gut geeignet.

Unter den Diolen der Formel (VI) sind solche besonders gut geeignet, in denen in den Einheiten $(CHR)_f$ alle Reste R für Wasserstoff stehen. In den Einheiten $(CHR\text{-}CHR\text{-}O)_g$ stehen bevorzugt alle Reste R unabhängig voneinander für Wasserstoff oder $CH_3$.

Die Ester, welche Komponente A bilden, sind Verbindungen oder Gemische von Verbindungen, welche vorzugsweise 1 bis 10 Einheiten, die aus der Dicarbonsäure stammen bzw. Einheiten, die aus dem Diol stammen, aufweisen. Bedingt durch die Anwesenheit der Reste $R_F$, die mehrere $CF_2$-Gruppen enthalten, ist Komponente A ein Oligomer oder Polymer oder ein Gemisch von Oligomeren oder Polymeren. Je nach Anzahl der Estergruppierungen,

die bevorzugt 1 bis 10 beträgt, wie oben erwähnt, kann Komponente A zusätzlich einen Oligoester oder Polyester oder ein Gemisch von Oligoestem oder Polyestern darstellen. Die Anzahl von Einheiten, die aus der Dicarbonsäure bzw. aus dem Diol stammen, also die Anzahl von Esterbindungen, die vorzugsweise 1 bis 10 beträgt, kann gesteuert werden durch die Reaktionsbedingungen der Umsetzung von Dicarbonsäure (-derivat) mit Diol. So kann z.B. bei der Veresterung oder Umesterung die Reaktion in bekannter Weise abgebrochen werden durch Temperaturerniedrigung oder pH-Änderung (Entfernung der als Katalysator dienenden Säure).

Hingegen ist die unten näher beschriebene Komponente B ein Oligourethan oder Polyurethan bereits allein dadurch, daß mehrere Urethanbindungen anwesend sind. Das heißt, den Charakter eines Oligomeren oder Polymeren oder eines Gemischs aus Oligomeren und Polymeren erhält Komponente B nicht allein durch Reste $R_F$.

Vorzugsweise werden als Komponente A Ester verwendet, die sich erhalten lassen durch Umsetzung (Polykondensation) von Dicarbonsäure oder Dicarbonsäuregemisch mit Diol oder Diolgemisch in einem solchen Mengenverhältnis, daß pro mol -COOH-Gruppen der Dicarbonsäure oder des Dicarbonsäuregemischs insgesamt 0,9 bis 1,1 Mol alkoholische OH-Gruppen des Diols oder Diolgemischs eingesetzt werden, wobei 50 bis 100 % der Anzahl dieser alkoholischen OH-Gruppen aus einem Diol der Formel (II) und/oder der Formel (III) stammen. Stellt man Komponente A durch Umesterung her, so verwendet man bevorzugt in analoger Weise 0,9 bis 1,1 Mol alkoholische Gruppen pro Estergruppe des als Ausgangsubstanz dienenden Dicarbonsäurediesters.

Komponente B der erfindungsgemäßen Zusammensetzungen ist ein Oligo- oder Polyurethan, das erhältlich ist durch Umsetzung eines Diols oder Diolgemischs der oben genannten Formeln (II), (III), (IV), (V), (VI) oder der Formel (VII) mit einem Diisocyanat oder Diisocyanatgemisch. Formel (VII) beschreibt 1,1,1-Tris-methylolpropan. Die oben für die Herstellung von Komponente A gemachten Aussagen zu besonders geeigneten, bevorzugten Verbindungen dieser Formeln gelten auch für die Herstellung der Komponente B. Im Gegensatz zur Herstellung von Komponente A ist es jedoch für die Herstellung von Komponente B nicht unbedingt erforderlich, daß mindestens ein Diol der Formel (II) oder der Formel (III) an der Umsetzung beteiligt ist. Bevorzugt wird aber auch für dessen Herstellung mindestens ein Diol der Formel (II) oder (III) allein verwendet oder mitverwendet.

Das Diisocyanat oder Gemisch von Diisocyanaten, das mit Diol oder Diolgemisch zu einer Komponente B umgesetzt werden kann, entspricht der Formel (VIII).

$$OCN\text{-}R'''\text{-}NCO \qquad (VIII)$$

Hierin steht R''' für einen zweiwertigen aliphatischen oder cycloaliphatischen Rest mit 4 bis 40 Kohlenstoffatomen oder für einen zweiwertigen aromatischen Rest der Formel

$$-C_6H_3(R)-$$

oder der Formel

$$-C_6H_3(R)-CH_2-C_6H_3(R)-$$

Hierbei steht $C_6H_3$ für den dreiwertigen, von Benzol abgeleiteten Rest. Eine dieser 3 freien Valenzen ist an den Rest R gebunden, wobei R die obengenannte Bedeutung besitzt, und vorzugsweise für Wasserstoff oder eine Methylgruppe steht. Die beiden anderen freien Valenzen am Rest $C_6H_3$ befinden sich bevorzugt in para-Stellung zueinander, d.h. die Isocyanatgruppen sind bevorzugt in para-Stellung zueinander angeordnet.

Der aliphatische oder cycloaliphatische Rest, für den R''' stehen kann, kann linear oder verzweigt sein. Geeignete Diisocyanate zur Herstellung von Komponente B sind beispielsweise Hexamethylen-1,6-diisocyanat, Trimethyl-hexamethylen-1,6-diisocyanat (Isomerengemisch) oder DDI 1410-Diisocyanat (Hersteller Henkel, USA), DDI 1410-Diisocyanat ist ein Cyclohexanderivat, bei dem an 4 Ringkohlenstoffatome je ein längerer Alkylrest gebunden ist. Zwei dieser längerkettigen Alkylreste tragen je eine endständige -NCO-Gruppe. DDI 1410 Diisocyanat weist insgesamt 38 Kohlenstoffatome auf. Bevorzugt verwendete Diisocyanate der Formel (VIII) sind solche, in denen R''' für einen offenkettigen aliphatischen, verzweigten oder unverzweigten Rest mit 4 bis 10 C-Atomen, für einen cycloaliphatischen Rest mit 6 - 40 C-Atomen oder für einen aromatischen Rest der oben genannten Struktur steht. Unter den cycloaliphatischen Diisocyanaten sind bevorzugt unsubstituiertes Cyclohexan-1,4-diisocyanat, durch eine oder mehrere Alkylgruppen substituiertes Cyclohexan-1,4-diisocyanat oder ein durch Alkylgruppen substituiertes Cyclohexan, bei dem jeweils am Ende von zwei dieser Alkylgruppen -NCO-Gruppen vorliegen.

Unter den aromatischen Diisocyanaten sind besonders bevorzugt Toluylendiisocyanate $C_6H_3(CH_3)(NCO)_2$, wobei $C_6H_3$ wieder für den dreiwertigen von Benzol abgeleiteten Rest steht. Die Stellung der Methylgruppe und der beiden

NCO-Gruppen zueinander kann beliebig sein, es können auch Isomerengemische verwendet werden, z.B. ein Gemisch aus Toluol-2,4- und 2,6-diisocyanat. Ein weiteres zur Herstellung von Komponente B bevorzugtes Diisocyanat ist Diphenylmethan-4,4'-diisocyanat.

Wie im Fall der Herstellung von Komponente A besteht auch für die Herstellung von Komponente B eine bevorzugte Ausführungsform darin, daß die Ausgangsverbindungen in äquimolaren oder annähernd äquimolaren Mengen miteinander umgesetzt werden. Eine bevorzugte Ausführungsform erfindungsgemäßer Zusammensetzung ist somit dadurch gekennzeichnet, daß Komponente B ein Oligourethan oder Polyurethan ist, das erhältlich ist durch Umsetzung eines Diols oder Gemischs von Diolen der oben genannten Formeln (II) bis (VII) mit einem Diisocyanat oder Gemisch von Diisocyanaten der Formel (VIII) in einem solchen Verhältnis, daß pro Mol alkoholischer Gruppe des Diols oder Diolgemischs 0,9 bis 1,1 Mol NCO-Gruppen des Diisocyanats oder Diisocyanatgemischs eingesetzt werden.

Komponente B ist ein Oligomeres oder Polymeres und zwar nicht nur wegen der Anwesenheit von Resten $R_F$ (die im Gegensatz zu Komponente A in Komponente B nicht unbedingt enthalten sein müssen). Vielmehr gewinnt Komponente B den Charakter eines Oligomeren oder Polymeren bereits durch die Anwesenheit von mehreren Urethanbindungen -NH-CO-. Deren Zahl in Komponente B liegt bei durchschnittlich 5 bis 50 pro Molekül, vorzugsweise 5 bis 30. Die Anzahl der Urethanbindungen in Komponente B kann in bekannter Weise gesteuert werden durch die Herstellungsbedingungen.

Enthält das Oligo- oder Polyurethan, das durch die Umsetzung von Diisocyanat mit Diol erhalten wird, noch freie Isocyanatgruppen, z.B. wegen der Verwendung eines molaren Überschusses an Diisocyanat, so werden diese NCO-Gruppen vorzugsweise blockiert. Dieses Urethan mit blockierten Isocyanatgruppen eignet sich gut als Komponente B erfindungsgemäßer Zusammensetzungen. Zur Blockierung der NCO-Gruppen können Verbindungen mit sauren Wasserstoffatomen verwendet werden, die aus der Fachliteratur bekannt sind. Beispiele für geeignete Blockierungsmittel sind Dimethylpyrazol, Diacetyl, Caprolactam oder unsubstituierte oder substituierte Phenole. Besonders bevorzugt für erfindungsgemäße Zusammensetzungen sind Ketonoxime als Blockierungsmittel, insbesondere Butanonoxim, Acetonoxim oder Methylisobutylketonoxim.

Verwendet man zur Herstellung von Komponente B ein Gemisch von Diisocyanaten und/oder ein Gemisch von Diolen, so kann die Umsetzung so erfolgen, daß man alle einzelnen Verbindungen der Gemische gleichzeitig einsetzt. Beispiele dafür sind die Umsetzung eines einzigen Diisocyanats mit einem Gemisch von Diolen, eines Diisocyanatgemischs mit einem einzigen Diol oder die Umsetzung von Diisocyanatgemisch mit Diolgemisch bei gleichzeitiger Anwesenheit aller einzelnen Verbindungen der jeweiligen Gemische. Gut geeignet zur Herstellung einer Komponente B ist jedoch auch ein Verfahren, bei dem die einzelnen Verbindungen eines solchen Gemischs nacheinander verwendet werden. Dies sei am Beispiel einer bevorzugten Ausführungsform erfindungsgemäßer Zusammensetzungen erläutert. Diese besteht darin, daß Komponente B ein Oligourethan oder Polyurethan ist, das erhältlich ist durch Umsetzung eines Diols der Formel (II) mit einem Diisocyanat der Formel OCN-R'''-NCO, worin R''' ein linearer oder verzweigter Alkylenrest mit 6 - 12 C-Atomen ist, in solchen Mengen, daß das entstehende Umsetzungsprodukt keine freien -NCO-Gruppen, aber freie OH-Gruppen besitzt, anschließend weiterer Umsetzung mit einem cycloaliphatischen Diisocyanat mit 10 bis 40 C-Atomen in solchen Mengen, daß das entstehende Umsetzungsprodukt freie NCO-Gruppen aufweist, und anschließend Umsetzung mit einem Diol der Formel (V) in solchen Mengen, daß das entstehende Umsetzungsprodukt (Komponente B) keine freien NCO-Gruppen aufweist. Bei dieser Ausführungsform wird also ein Gemisch von Diisocyanaten verwendet, wobei zuerst das Diol mit einem Unterschuß Diisocyanat umgesetzt wird, dann mit einem Überschuß an einem anderen Diisocyanat, wobei anschließend freie NCO-Gruppen mit einem anderen Diol umgesetzt werden. Auch für diese bevorzugte Ausführungsform gelten die oben gemachten Aussagen bezüglich der bevorzugten Strukturen der Diisocyanate und Diole.

Die Umsetzung von Diisocyanaten mit Diolen, die zu einer Komponente B führt, kann nach allgemein bekannten Methoden zur Herstellung von Polyurethanen durchgeführt werden, z.B. als Umsetzung in einem organischen Lösungsmittel. Wie im Fall der Herstellung der Komponente A sind als Lösungsmittel Ketone geeignet, die sich später durch Destillation leicht entfernen lassen, z.B. Methyl-isobutyl-keton. Die leichte Entfernbarkeit des Lösungsmittels ist vorteilhaft, weil es günstig ist, erfindungsgemäße Zusammensetzungen in Form lösungsmittelfreier wäßriger Dispersionen zur Behandlung von Fasermaterialien zu verwenden.

Als Komponente B geeignete Oligo- oder Polyurethane sind in der EP-A 348 350 beschrieben, ein besonders geeignetes Verfahren zur Herstellung geeigneter Oligo- oder Polyurethane ist der EP-A 459 125 zu entnehmen.

Es wurde gefunden, daß mit (nicht-erfindungsgemäßen) Zusammensetzungen in Form wäßriger Dispersionen, welche eine Komponente A, aber keine Komponente B enthalten, zwar gewisse Effekte bei öl- und wasserabweisenden Ausrüstungen erzielt werden können, daß jedoch die Effekte noch nicht in jeder Hinsicht zufriedenstellend sind. Das Gleiche gilt für Zusammensetzungen, welche eine Komponente B, aber keine Komponente A enthalten. Im ersteren Fall besteht ein Nachteil darin, daß es vielfach schwierig ist, eine stabile wäßrige Dispersion von Komponente A zu erhalten, wenn ausschließlich nichtionogene Dispergatoren verwendet werden. Wäßrige Dispersionen sind andererseits sehr erwünscht, wenn Komponente A zur öl- und/oder wasserabweisenden Ausrüstung von textilen Flächengebilden verwendet werden soll. Zwar gelingt es, stabile wäßrige Dispersionen von Komponente A zu erhalten,

wenn man ionische, z.B. kationische, Dispergatoren verwendet. Hierbei resultiert aber häufig der Nachteil, daß die ausgerüsteten Textilien eine erhöhte Tendenz zur Effektverschlechterung nach Abriebvorgängen zeigen. Dies beruht darauf, daß bei Abriebvorängen auch Ausrüstmittel (mechanisch) von der Textiloberfläche entfernt wird. Das Resultat ist, daß die öl-/wasserabweisende Wirkung beim Gebrauch der Textilien deutlich abnehmen kann. Außerdem sind kationische Dispersionen von Komponente A nicht optimal bezüglich LAD (laundry air dry)-Effekten, vor allem auf Synthesefasergeweben. Gute LAD-Effekte, d.h. Formstabilität der Textilien nach Waschvorgängen ohne ein Bügeln nach dem Waschen, sind wünschenswert, weil die Textilien nach dem Waschen an der Luft getrocknet werden können, ohne daß ein Bügelvorgang erforderlich ist. Die Textilien behalten nach Trocknung an der Luft ihre ursprüngliche Form, wenn die Ausrüstung einen guten LAD-Effekt bewirkt. Es hat sich jedoch gezeigt, daß wäßrige Dispersionen von Komponente A (ohne eine Komponente B) zu guten LAD-Werten führen, wenn die Dispersionen nur nichtionogene, d.h. vor allem keine kationischen Dispergatoren enthalten. Allerdings sind solche Dispersionen in vielen Fällen nicht oder nur über kurze Zeit stabil.

Wäßrige Dispersionen, welche eine Komponente B enthalten, aber keine Komponente A, zeigen den Nachteil, daß sie zwar zu guter Öl- und Wasserabweisung führen, wenn Komponente B $R_F$-Gruppen enthält, also ausgehend von einem Diol der Formel (II) oder (III) hergestellt wurde, jedoch bezüglich LAD-Effekten der ausgerüsteten Textilien nicht optimal sind.

Es wurde nun überraschenderweise gefunden, daß durch eine Kombination der Komponenten A und B die geschilderten Nachteile beseitigt werden können. Durch eine solche Kombination, welche das Wesen der vorliegenden Erfindung darstellt, werden die positiven Eigenschaften der Komponente A und der Komponente B beibehalten und vielfach noch verbessert. So liefern erfindungsgemäße Zusammensetzungen in vielen Fällen bessere Ergebnisse bezüglich Permanenz der Effekte nach Abriebvorgängen, LAD, Öl- und Wasserabweisung als jede der beiden Komponenten A und B alleine.

Erfindungsgemäße Zusammensetzungen führen auf Faumwoll-Faserstoffen zu sehr guten Effekten bezüglich LAD und Abriebbeständigkeit selbst dann, wenn sie ionogene, z.B. kationische Dispergatoren enthalten. Dagegen sind auf Geweben aus Synthesefasern und aus Synthese/Baumwoll-Mischungen die Ergebnisse bezüglich LAD und Abriebbeständigkeit nicht in allen Fällen optimal, wenn ionische, vor allem kationische, Dispergatoren anwesend sind. Aus diesem Grund enthalten erfindungsgemäße Zusammensetzungen vorzugsweise keine ionischen Dispergatoren, sondern nur nichtionogene. In diesem Fall sind sie nämlich hervorragend geeignet für die Behandlung beliebiger Fasermaterialien, sowohl für Baumwolle als auch für Synthetics oder Fasermischungen. Die Effekte der Öl- und Wasserabweisung, LAD-Effekte und Abriebbeständigkeit, d.h. Permanenz der Effekte nach Abriebvorgängen sind bei Verwendung solcher nichtionogener Zusammensetzungen sehr gut. Obwohl eine wäßrige Dispersion, welche Komponente A, aber keine Komponente B enthält, in vielen Fällen nur stabil erhalten werden kann, wenn ein kationischer Dispergator verwendet wird, hat sich überraschenderweise gezeigt, daß eine wäßrige Dispersion, die A und B enthält, auch bei ausschließlich nichtionischer Dispergierung in hoher Stabilität erhalten werden kann. Dies gilt insbesondere, wenn zur Dispergierung das unten und in Anspruch 11 angegebene bevorzugte Verfahren angewandt wird (gemeinsame Dispergierung von A und B).

Als nichtionogene Dispergatoren können aus der Fachliteratur bekannte oberflächenaktive Verbindungen eingesetzt werden, z.B. ethoxilierte Phenole, Carbonsäuren usw. Geeignete propoxilierte oder ethoxilierte/propoxilierte Dispergatoren (block- oder random-Copolymere) sind ebenfalls in der Fachliteratur beschrieben. An Stelle eines einzigen Dispergators kann auch ein Gemisch nichtionogener Dispergatoren eingesetzt werden. Besonders geeignet als Dispergatoren für erfindungsgemäße Zusammensetzungen sind ethoxilierte Alkohole der Formel $R^1\text{-}O\left(CH_2CH_2O\right)_n\text{-}H$. Hierin bedeutet $R^1$ einen linearen oder verzweigten Alkylrest mit 6 bis 22 Kohlenstoffatomen und n eine Zahl von 4 bis 14.

Enthalten wäßrige Dispersionen erfindungsgemäßer Zusammensetzungen noch weitere Bestandteile, z.B. solche der unten genannten Art, so kann es zweckmäßig sein, daß aus diesem Grund gewisse Anteile ionogener oberflächenaktiver Verbindungen anwesend sind, entweder als Dispergatoren oder als Flottenstabilisatoren. Ein Beispiel hierfür ist eine erfindungsgemäße Zusammensetzung, bei deren Herstellung zunächst eine wäßrige Dispersion der Komponenten A und B unter ausschließlicher Verwendung nichtionogener Dispergatoren hergestellt wird und der dann eine wäßrige Dispersion eines Acrylatpolymeren mit $R_F$-Gruppen hinzugefügt wurde. Solche wäßrigen $R_F$-Acrylatdispersionen können handelsübliche Produkte sein, die vielfach unter Verwendung kationischer Dispergatoren hergestellt werden. Als Flottenstabilisatoren können amphotere Dispergatoren wie Aminoxide oder Pyrazolin-Betaine in Frage kommen. Bei der Herstellung von wäßrigen Dispersionen erfindungsgemäßer Zusammensetzungen sollten jedoch, wenn ionogene Dispergatoren überhaupt verwendet werden, diese erst einer stabilen nichtionogenen Dispersion nachträglich zugesetzt und nicht bereits bei der Herstellung einer Dispersion von Komponente A und B verwendet werden.

Enthalten erfindungsgemäße Zusammensetzungen neben den bevorzugten nichtionogenen Dispergatoren noch kationische, z.B. auf Grund eines nachträglichen Zusatzes einer fertigen kationischen $R_F$-Acrylatdispersion, so sollte die Menge an kationischem Dispergator gering gehalten werden, um nicht eine Verschlechterung von LAD und Abriebbeständigkeit zu riskieren. Der nachträgliche Zusatz einer wäßrigen Dispersion eines Acrylpolymeren, das $R_F$-Gruppen enthält, kann vor allem dann in Frage kommen, wenn Komponente B ein Oligo- oder Polyurethan ist, das keine fluorierten Reste ($R_F$-Gruppen) enthält. In diesem Fall kann es zweckmäßig sein, eine $R_F$-Acrylpolymer-Dispersion zuzusetzen. Dadurch wird der Gehalt an Fluor in der erfindungsgemäßen Zusammensetzung erhöht und damit auch das Niveau der öl-/wasserabweisenden Wirkung.

Erfindungsgemäße Zusammensetzungen, welche nicht in Form wäßriger Dispersionen vorliegen, können durch einfaches Mischen der Komponenten A und B und ggf. weiterer Komponenten hergestellt werden.

Die Herstellung von wäßrigen Dispersionen erfindungsgemäßer Zusammensetzungen kann nach verschiedenen Methoden erfolgen.

Eine Möglichkeit besteht darin, getrennt voneinander eine erste wäßrige Dispersion herzustellen, die Komponente A, aber nicht Komponente B enthält, und eine zweite wäßrige Dispersion herzustellen, die B, aber nicht A enthält, und anschließend diese erste und zweite Dispersion miteinander zu vereinigen. Sowohl die erste als auch die zweite Dispersion können zusätzlich weitere Komponenten enthalten, z.B. die unten näher beschriebenen Komponenten C oder D, 1,2-Propylenglykol und/oder ein Weichgriffmittel und/oder einen Cellulosevernetzer. Vorzugsweise sind aus den erwähnten Gründen sowohl die erste als auch die zweite wäßrige Dispersion frei von ionogenen Dispergatoren, insbesondere frei von kationischen Dispergatoren. Im Einzelfall kann jedoch eine der beiden eine kleinere Menge an einem Flottenstabilisator der oben genannten Art enthalten. Ein Flottenstabilisator und/oder weitere Komponenten können jedoch auch zugesetzt werden, nachdem man die erste und die zweite Dispersion miteinander vereinigt hat. Diese erst der fertigen, A und B enthaltenden, Dispersion nachträglich zugesetzten Komponenten können wieder von der oben genannten Art sein. Insbesondere ist es vorteilhaft, falls dieses Herstellungsverfahren gewählt wird, wenn die durch Vereinigung zweier getrennter Dispersionen entstandene Dispersion eine Komponente C enthält. Die Zugabe dieser Komponente C kann erfolgen, indem man C entweder der ersten oder der zweiten Dispersion hinzufügt oder, was bevorzugt ist, erst der fertigen, nach Vereinigung entstandenen Dispersion. Komponenfe C ist ein Acrylpolymeres, das perfluorierte Reste $R_F$ aufweist und unten näher beschrieben wird. Sie kann in Form des reinen Polymeren zugesetzt werden, bevorzugt verwendet man aber eine fertige wäßrige Dispersion des $R_F$-Acrylpolymeren. Der Grund, weshalb es bevorzugt ist, daß eine erfindungsgemäße Zusammensetzung im Fall der getrennten Dispergierung der Komponenten A und B zusätzlich ein $R_F$-Acrylpolymeres enthält, ist folgender: Es hat sich gezeigt, daß wäßrige Dispersionen, welche eine Komponente A, nicht aber Komponente B enthalten, nicht sehr stabil sind, wenn keine ionischen Dispergatoren verwendet werden. Vermischt man eine solche Dispersion von Komponente A mit einer ebenfalls ausschließlich nichtionischen Dispersion von Komponente B, so ist die erhaltene Zusammensetzung ebenfalls nicht sehr stabil, wenn Komponente B perfluorierte Reste $R_F$ enthält. Enthält jedoch die nichtionische Dispersion von B keine perfluorierten Reste $R_F$, so ist die Stabilität der erhaltenen Dispersion, die A und B enthält, deutlich erhöht. Falls man das Herstellungsverfahren anwendet, bei dem man eine Dispersion von A getrennt von einer Dispersion von B herstellt und diese Dispersionen dann vereinigt, so ist es also aus Stabilitätsgründen vorteilhaft, als Komponente B ein $R_F$-freies Oligo- oder Polyurethan zu verwenden. Ein solches $R_F$-freies Urethan ist herstellbar durch Umsetzung eines Diisocyanats oder Diisocyanatgemischs der Formel (VIII) mit einem Diol oder Diolgemisch der Formel (IV), (V),(VI) oder (VII), nicht aber der Formel (II) oder (III).Damit aber eine solche Dispersion, welche eine $R_F$-freie Komponente B enthält, ein optimales Effektniveau bezüglich Öl-und Wasserabweisung ergibt, ist es bevorzugt, den Fluorgehalt der Dispersion durch Zusatz einer Komponente C zu erhöhen.

Obwohl mit dem genannten Herstellungsverfahren der getrennten Dispergierung von Komponente A und Komponente B erfindungsgemäße Zusammensetzungen guter Qualität erhalten werden können, besteht ein bevorzugtes Herstellungsverfahren für erfindungsgemäße Zusammensetzungen in Form wäßriger Dispersionen darin, daß man eine Mischung aus den Komponenten A und B herstellt, welche gegebenenfalls noch zusätzlich ein organisches Lösungsmittel und/oder eine Komponente D enthält, diese Mischung unter Verwendung eines nichtionogenen Dispergators oder Dispergatorgemischs ohne Verwendung eines anionischen oder kationischen Dispergators in Wasser dispergiert und anschließend gegebenenfalls das organische Lösungsmittel entfernt und gegebenenfalls weitere Komponenten hinzufügt.

Es hat sich gezeigt, daß erfindungsgemäße Zusammensetzungen in Form wäßriger Dispersionen , die nach diesem Verfahren der gemeinsamen Dispergierung hergestellt wurden, vielfach noch eine Verbesserung darstellen gegenüber Zusammensetzungen, die durch getrennte Dispergierung von A und B erhalten wurden. Diese Verbesserung betrifft vor allem eine noch weiter verringerte Tendenz zur Effektabschwächung nach Abriebvorgängen und eine weitere Effektsteigerung bezüglich LAD. Der Grund für diesen Unterschied zwischen getrennter und gemeinsamer Dispergierung ist nicht bekannt; er könnte darin liegen, daß eine nichtionogene Dispersion von Komponente A, die beim Verfahren getrennter Dispergierung verwendet wird, keine besonders hohe Stabilität aufweist. Beim bevorzugten Verfahren der gemeinsamen Dispergierung dagegen liegt nie eine getrennte nichtionische Dispersion von Komponente A vor. Es ist also möglich, daß die gemeinsame Dispergierung zu einer anderen Charakteristik der dispersen Phase führt und daß diese Charakteristik sich auf das Effektniveau auf dem ausgerüsteten Textil auswirkt. Somit ist als Herstellungsverfahren für erfindungsgemäße Zusammensetzungen das oben und in Anspruch 11 genannte Verfahren

bevorzugt, und unter den erfindungsgemäßen Zusammensetzungen in Form wäßriger Dispersionen sind solche bevorzugt, welche sich durch dieses Verfahren erhalten lassen.

Auch bei diesem bevorzugten Herstellungsverfahren der gemeinsamen Dispergierung ist es bevorzugt, keine ionischen, insbesondere keine kationischen, Dispergatoren zu verwenden, sondern nur nichtionogene. Die Dispergatoren können dem Gemisch der Komponenten A und B vor Dispergierung zugesetzt werden, so daß dieses Dispergator enthaltende Gemisch in reinem Wasser dispergiert wird. Es ist aber auch möglich, und oft von Vorteil, den Dispergator dem Wasser vor Dispergierung zuzusetzen und ein dispergatorfreies Gemisch der Komponenten A und B in dieses, Dispergator enthaltende, Wasser einzurühren. An Stelle eines einzigen nichtionogenen Dispergators kann auch ein Gemisch nichtionogener Dispergatoren eingesetzt werden. Die Dispergierung kann nach bekannten Methoden unter Rühren und nachfolgender Homogenisierung bei Raumtemperatur oder erhöhter Temperatur erfolgen. Sowohl das Gemisch der Komponenten A und B als auch das Wasser können bereits vor dem Dispergiervorgang weitere Komponenten enthalten, z.B. die oben für den Fall getrennter Dispergierung genannten. Es ist auch möglich, daß das Gemisch der Komponenten A und B noch ein organisches Lösungsmittel enthält, in dem sich A und B lösen, z.B. ein niedrigmolekulares aliphatisches Keton. Der Einsatz eines organischen Lösungsmittels kann die Handhabung des Gemischs aus A und B erleichtern. Nach Dispergierung des Gemischs in Wasser wird ein gegebenenfalls anwesendes organisches Lösungsmittel vorzugsweise wieder entfernt, z.B. durch Destillation. Ist es erwünscht, daß eine erfindungsgemäße Zusammensetzung weitere Komponenten außer A und B und Dispergatoren enthält, so können diese nicht nur vor der Dispergierung dem Gemisch aus A und B oder dem Wasser zugesetzt werden. Möglich ist auch, eine oder mehrere weitere Komponenten erst nach der Dispergierung des Gemischs aus A und B hinzuzufügen.

Auch für das bevorzugte Verfahren der gemeinsamen Dispergierung ist es vorteilhaft, nichtionogene Dispergatoren der oben bereits beschriebenen Art zu verwenden, nämlich ethoxilierte Alkohole der Formel $R^1\text{-O}(CH_2CH_2O)_n H$. Es kann ein einziger solcher Alkohol eingesetzt werden oder ein Gemisch solcher Alkohole. $R^1$ bedeutet hierbei, wie bereits oben ausgesagt, einen linearen oder verzweigten Alkylrest mit 6 bis 22 Kohlenstoffatomen und n eine Zahl von 4 bis 14. Es sind aber auch andere nichtionogene Dispergatoren der oben bereits genannten Art gut geeignet.

Erfindungsgemäße Zusammensetzungen enthalten Komponente A und Komponente B zweckmäßigerweise in solchen Mengen, daß das Gewichtsverhältnis von A zu B im Bereich von 1:5 bis 10:1, liegt. Bevorzugt ist ein Verhältnis von 1:1 bis 5:1. Für das bevorzugt angewandte Herstellungsverfahren der gemeinsamen Dispergierung enthält also das zu dispergierende Gemisch der Komponenten A und B diese beiden Komponenten bevorzugt in dem genannten Mengenverhältnis. Ferner enthalten erfindungsgemäße Zusammensetzungen, wenn sie in Form wäßriger Dispersionen vorliegen, bevorzugt 10 bis 50 insbesondere 10 - 35 Gew% an der Summe der Komponenten A und B. Diese Mengenangabe bezieht sich auf das Gesamtgewicht der Dispersion ohne organisches Lösungsmittel, also das Gewicht, das eine Dispersion besitzt, nachdem ein vorher gegebenenfalls enthaltenes organisches Lösungsmittel entfernt wurde. Der angegebene Mengenbereich von 10 bis 35 % stellt den optimalen Bereich bezüglich Effektniveau und wirtschaftlichen Faktoren dar. Bei einem Gehalt von weniger als 10 Gew% an der Summe aus Komponenten A und B kann es im Einzelfall vorkommen, daß das Effektniveau der öl-/wasserabweisenden Ausrüstung von Textilien das geforderte Niveau nicht erreicht. Bei einer Erhöhung des Gehalts auf mehr als 50 Gew% ist im Normalfall keine relevante Steigerung der Effekte mehr zu erreichen, jedoch werden die Kosten der Zusammensetzungen höher.

Erfindungsgemäße Zusammensetzungen können außer den Komponenten A und B weitere Komponenten enthalten. Beispiele für solche Komponenten sind Weichgriffmittel, Cellulosevernetzer und Flammschutzmittel, wie sie in der Textilveredlungsindustrie üblich sind. Bevorzugt enthalten erfindungsgemäße Zusammensetzungen neben den Komponenten A und B zusätzlich eine oder mehrere der unten beschriebenen Komponenten C und D und 1,2-Propylenglykol. 1,2-Propylenglykol kann als Stabilisator für wäßrige Dispersionen oder Flotten dienen. Sollen wäßrige Dispersionen erfindungsgemäßer Zusammensetzungen weitere Komponenten außer A und B enthalten, so können diese vor oder nach der Dispergierung zugesetzt werden. Es ist möglich, im Fall der erwähnten getrennten Dispergierung der Komponenten A und B die zusätzlich verwendeten Komponenten entweder der Komponente A oder der Komponente B vor deren Dispergierung hinzuzufügen oder einer der getrennt hergestellten wäßrigen Dispersionen hinzuzufügen. Es ist auch möglich, diese zusätzlich verwendeten Komponenten erst nach der Vereinigung der getrennt hergestellten Dispersionen von A und B zuzugeben. Im Fall der getrennten Herstellung je einer Dispersion der Komponente A und der Komponente B ist es vielfach von Vorteil, zusätzlich verwendete Komponenten erst nach Vereinigung der beiden Dispersionen hinzuzufügen. Soll eine Komponente D verwendet werden, so kann es allerdings von Vorteil sein, wenn bereits die getrennt hergestellte Dispersion von Komponente B diese Komponente D enthält.

Bei dem bevorzugten Verfahren der gemeinsamen Dispergierung von Komponente A und Komponente B ist es von Vorteil, wenn das Gemisch aus A und B vor Dispergierung keine weiteren Komponenten außer gegebenenfalls Komponente D und gegebenenfalls organisches Lösungsmittel enthält. In diesem Fall wird der Dispergator oder das Dispergatorgemisch dem Wasser zugesetzt, in das das Gemisch eingerührt wird, welches die Komponenten A und B sowie gegebenenfalls Komponente D und organisches Lösungsmittel enthält. Vorzugsweise werden erst nach der Dispergierung dieses Gemischs weitere Komponenten zugesetzt.

Komponente C ist ein Homopolymer oder Copolymer der Acrylsäure oder Methacrylsäure, das einen oder mehrere perfluorierte Reste $R_F$ der oben genannten Art enthält. Vorzugsweise handelt es sich hierbei um Polymere, die einen Acrylsäure- oder Methacrylsäureester als Monomerbaustein enthalten, wobei der Rest $R_F$ in der Alkoholkomponente dieses Esters vorliegt. Vorzugsweise enthalten diese Homo- oder Copolymeren als Monomerbaustein eine Verbindung der Formel

$$CH_2=C(R^2)-COO-R^3-R_F$$

worin $R^2$ für Wasserstoff oder eine Methylgruppe steht, $R_F$ die oben und in Anspruch 1 genannte Bedeutung besitzt und $R^3$ für einen aliphatischen linearen zweiwertigen Rest mit 2 bis 4 Kohlenstoffatomen steht. Wenn Komponente C ein Copolymer ist, so enthält es außer den hier genannten Monomerbestandteilen noch weitere. Bevorzugt als weitere Comonomere sind Vinylchlorid, Vinylidenchlorid und fluorfreie Acrylsäure- oder Methacrylsäureester, insbesondere Ester mit 4 bis 22 Kohlenstoffatomen in der Alkoholkomponente. Geeignet außer den oben genannten $R_F$-Polymeren sind auch solche, in denen zwischen Acrylsäurerest und dem Rest $R_F$ noch zusätzlich zweiwertige funktionelle Reste eingebaut sind, z.B. -O-, -S-, -NH-. Solche Polymere sind beispielsweise in der EP-A 190 993 beschrieben.
Acrylsäure- oder Methacrylsäure- homo- oder copolymere der genannten Art können nach allgemein bekannten Verfahren hergestellt werden, z.B. durch radikalisch initiierte Homo- oder Copolymerisation der entsprechenden Monomeren. Als Komponente C geeignete $R_F$-Acrylpolymere sind in der Literatur beschrieben, z.B. in der EP-A 234 724, EP-A 190 993, US-A 3 893 984, US-A 3 808 251 und US-A 3 491 169.

Komponente D ist ein Diisocyanat oder ein Polyisocyanat, dessen NCO-Gruppen blockiert sind. Es ist bekannt, solche blockierten mehrwertigen Isocyanate als sogenannte Extender im Rahmen der Textilausrüstung einzusetzen. Die Verwendung dieser Extender in Kombination mit fluorhaltigen Polymeren ermöglicht es, das Effektniveau und dessen Permanenz bezüglich der öl- und wasserabweisenden Effekte zu steigern.

Als Diisocyanate geeignet für die Herstellung einer Komponente D sind die gleichen, wie sie oben im Zusammenhang mit der Herstellung von Komponente B beschrieben werden. Als Polyisocyanate, d.h. Verbindungen mit mehr als zwei NCO-Gruppen geeignet sind Verbindungen, welche sich von den genannten Diisocyanaten dadurch unterscheiden, daß in diesen Diisocyanaten eine oder mehrere C-H-Bindungen durch C-N=C=O-Bindungen ersetzt sind. Diese C-H-Bindungen, die durch C-N=C=O ersetzt werden, können aliphatische oder aromatische C-H-Bindungen sein.
Als Blockierungsmittel für die -NCO-Gruppen kommen die gleichen in Frage, welche oben im Zusammenhang mit Komponente B genannt wurden. Bevorzugt sind in Komponente D die Isocyanatgruppen mit Ketonoximen blockiert, z.B. mit Butanonoxim. Die Blockierung ist bevorzugt vollständig, so daß sich in Komponente D keine freien Isocyanatgruppen analytisch nachweisen lassen.
Als Komponente D geeignete Produkte (Extender) sind in der Europäischen Patentanmeldung Nr. 98124501,2 (Anmeldetag: 22. Dezember 1998) beschrieben sowie in der EP-A 196 309, der EP-A 537 578 und der EP-A 872 503.
Die Di- oder Polyisocyanate mit blockierten Isocyanatgruppen, welche sich als Komponente D eignen, können auch Polymere sein, insbesondere Polyurethane, welche blockierte Isocyanatgruppen aufweisen. Solche Polyurethane können erhalten werden durch Umsetzung von mehrwertigen Isocyanaten mit mehrwertigen Alkoholen unter Verwendung eines Überschusses an Isocyanatgruppen gegenüber alkoholischen OH-Gruppen und anschließender Blockierung der im Polyurethan vorliegenden freien Isocyanatgruppen. Ein Beispiel für ein solches Polyurethan ist ein Produkt, das ausgehend von DESMODUR L75 der Firma Bayer durch Blockierung freier Isocyanatgruppen erhalten werden kann. Ein anderes Beispiel ist das Produkt Baygard EDW der Firma Bayer, ein Polyurethan auf Basis eines aromatischen Diisocyanats und 1,1,1-Trimethylolpropan, dessen Isocyanatgruppen mit Ketonoxim blockiert sind. Geeignet ist ferner ein Polyurethan, das sich durch Umsetzung eines Überschusses von Diphenylmethan-4,4'-diisocyanat mit einem Gemisch aus Mono-, Di- und Tripropylenglykol, anschließender weiterer Umsetzung mit 1,1,1-Trimethylolpropan und N-Methyldiethanolamin und Blockierung der freien NCO-Gruppen mit Butanonoxim erhalten läßt. Ferner sind Polyurethane geeignet, welche sich durch Umsetzung eines Überschusses eines Diisocyanats oder Diisocyanatgemischs der oben genannten Formel (VIII) mit einem Diol- oder Diolgemisch der Formel (V), (VI) oder (VII) und anschließender Blockierung der freien Isocyanatgruppen erhalten lassen.

Die Komponente D kann in reiner Form oder in Form einer wäßrigen Dispersion einer fertigen wäßrigen Dispersion der Komponenten A und B hinzugefügt werden. Für den Fall, daß das oben beschriebene Verfahren der gemeinsamen Dispergierung der Komponenten A und B angewandt wird, ist es jedoch bevorzugt, Komponente D dem Gemisch aus A und B vor Dispergierung hinzuzufügen. Wenn das Gemisch aus den Komponenten A und B in Form einer Lösung in einem organischen Lösungsmittel vorliegt, ist es zweckmäßig, auch Komponente D in Form einer Lösung in einem organischen Lösungsmittel einzusetzen. Es ist auch möglich, bei der Herstellung erfindungsgemäßer Zusammensetzungen so vorzugehen, daß die Komponente D direkt in einem Reaktionsgemisch hergestellt wird, das bereits Komponente B enthält. Dies kann z.B. so erfolgen, daß man in einem organischen Lösungsmittel ein Diisocyanat

mit einem Diol zu einer Komponente B umsetzt, anschließend zwecks Herstellung von Komponente D wieder Diisocyanat und Diol zusetzt, wobei ein Überschuß Diisocyanat verwendet wird und dann die freien NCO-Gruppen des entstandenen Polyurethans mit einem Ketonoxim blockiert. Bei diesem Verfahren kann das erste Diisocyanat, das zur Herstellung der Komponente B dient, das gleiche oder ein anderes Diisocyanat sein als dasjenige, aus dem Komponente D entsteht. Die so entstandene Lösung von B und D in einem organischen Lösungsmittel wird nun bevorzugt mit einer Komponente A vereinigt, die ebenfalls gelöst in organischem Lösungsmittel vorliegen kann. Das Gemisch aus A, B und D kann dann in Wasser, das einen nichtionogenen Dispergator enthält, eingerührt und das organische Lösungsmittel durch Destillation entfernt werden, um zu einer stabilen wäßrigen Dispersion der Komponenten A, B und D zu gelangen. Anschließend können, wenn gewünscht, weitere Komponenten der oben genannten Art hinzugefügt werden.

Erfindungsgemäße Zusammensetzungen liegen bevorzugt in Form wäßriger Dispersionen vor, welche die nachfolgend genannten Komponenten vorzugsweise in den angegebenen Mengenverhältnissen relativ zueinander enthalten:

5bis 50 Gewichts% an Komponente A, insbesondere 5 bis 25 Gew.%
3 bis 40 Gewichts% an Komponente B, insbesondere 5 bis 25 Gew.%
0 bis 30 Gewichts% an Komponente C, insbesondere 3 bis 20 Gew.%
0 bis 20 Gewichts% an Komponente D, insbesondere 3 bis 15 Gew.%
0,5 bis 10 Gewichts% an Dispergator oder Dispergatorgemisch
0 bis 20 Gewichts% an 1,2-Propylenglykol

Den Rest bilden Wasser und gegebenenfalls weitere Bestandteile.

Mit erfindungsgemäßen Zusammensetzungen, insbesondere in Form wäßriger Dispersionen, lassen sich Fasermaterialien, insbesondere textile Flächengebilde wie Gewebe oder Gewirke, behandeln und sehr gute öl- und wasserabweisende Effekte erzielen. Daneben ist es möglich, hierdurch Textilien zu erhalten, welche gute LAD-Effekte und keine oder nur geringe Neigung zur Effektverschlechterung nach Abriebvorgängen aufweisen. Beim Gebrauch dieser Textilien wird demnach die öl- und wasserabweisende Wirkung kaum verschlechtert, während Textilien aus dem Stand der Technik nach Gebrauch bzw. Abriebvorgängen vielfach eine schlechtere Permanenz der Öl- und Wasserabweisung zeigen. Dies ist vermutlich darauf zurückzuführen, daß beim mechanischen Abrieb auch ein Teil der fluorhaltigen Polymeren von der Textiloberfläche entfernt wird. Als Textilien, welche vorteilhaft mit erfindungsgemäßen Zusammensetzungen ausgerüstet werden können, kommen unter anderem Bezugsstoffe für Möbel und Fahrzeugsitze in Frage. Mit erfindungsgemäßen Zusammensetzungen können Textilien aus den verschiedensten Fasermaterialien vorteilhaft ausgerüstet werden, vorzugsweise Textilien, die zu 50 bis 100 % aus synthetischen Polymeren, insbesondere aus Polyester, Polyacrylnitril und/oder Polyamid und zu 0 bis 50 Gew% aus nativen Fasern, insbesondere Cellulose, bestehen.

Das Aufbringen von wäßrigen Dispersionen erfindungsgemäßer Zusammensetzungen auf die textiten Flächengebilde kann nach bekannten Methoden erfolgen, z.B. über Foulardieren. Die Konzentration der Ausrüstungsflotte und die Ausrüstbedingungen werden dabei bevorzugt so eingestellt, daß sich auf den Textilien nach dem Trocknen 0,05 bis 1,5 Gew%, vorzugsweise 0,1 bis 0,9 % Fluor befinden, bezogen auf das Gesamtgewicht des getrockneten Textils und berechnet als Gew% F. Nach der Applikation über Foulard wird in bekannter Weise abgequetscht und getrocknet, z.B. bei 100 bis 120°C während einer Zeit von 5 bis 15 Minuten. Vielfach ist es von Vorteil, nach dem Trocknen die Textilien noch bei höherer Temperatur zu behandeln, z.B. bei 130°C bis 180°C während 0,5 bis 10 Minuten.

Die Erfindung wird nunmehr durch Ausführungsbeispiele veranschaulicht.

Beispiel 1

a) Herstellung einer Komponente A:

In einem Dreihalskolben, versehen mit Rührer, Thermometer und Ölbad wurde ein Gemisch aus 0,5 Mol (87 g) Adipinsäuredimethylester und 0,5 Mol (600 g) eines Diols der Formel II von Anspruch 1 (mit X = -S-, c=1, b=2, h = überwiegend 7 bis 11) auf 100°C erwärmt und bei dieser Temperatur gerührt, bis keine festen Anteile mehr anwesend waren. Anschließend wurden als Umesterungskatalysator 8,5 g einer 70 %igen wäßrigen Lösung von Methansulfonsäure zugegeben. Das Gemisch wurde auf 110°C erwärmt und dann langsam der Druck reduziert. Nach Beginn der Abdestillation des gebildeten Methanols wurde noch 5 Stunden bei 150 bis 200 mbar und 110°C destilliert. Es wurden etwa 24 g Destillat erhalten. Nach Abkühlung erhielt man 660 g eines festen Produkts (Komponente A), das zwecks besserer Handhabung in etwa 830 g Methyl-isobutyl-keton gelöst wurde.

b) Herstellung einer nichtionogenen wäßrigen Dispersion einer Komponente A

225 g einer 65°C warmen Lösung, die gemäß Beispiel 1a) hergestellt war, wurden mittels eines schnellaufenden Rührgeräts in eine 65°C warme Mischung eingerührt, die 306 g Wasser, 10 g eines ethoxilierten (10 EO) Isotridecylalkohols und 13 g 1,2-Propylenglykol enthielt. Nach einer Hochdruckhomogenisierung bei 60°C erhielt man eine Dispersion, aus der bei 70°C das Lösungsmittel Methylisobutylketon unter vermindertem Druck abdestilliert wurde. Die resultierende Dispersion wurde mit Wasser auf eine Konzentration von 20 Gew% verdünnt. Das Ergebnis war eine milchige, leicht blaustichige Dispersion (Emulsion) ("Dispersion 1").

Beispiel 2

a) Herstellung einer Komponente B

320 g (0,267 Mol) des Diols der Formel II, das auch in Beispiel 1a verwendet wurde, 44,5 g (0,212 Mol) Trimethyl-hexamethylen-1,6-diisocyanat (Isomerengemisch) und 633 g Methyl-isobutylketon wurden gemischt und auf 65°C unter Rühren erwärmt.

Nachdem alles gelöst war, wurden 0,08 g Triethylamin und 0,3 g Dibutylzinndilaurat (beide als Lösung in Methylisobutylketon) zugegeben. Das Gemisch wurde bei 85°C gerührt, bis analytisch keine NCO-Gruppen mehr nachweisbar waren, dann auf 50°C eingestellt. Unter starkem Rühren wurden nacheinander 105 g (0,17 Mol) DDI-1410 Diisocyanat (Struktur siehe Beschreibungstext) und 13,6 g (0,23 Mol) N-Methyldiethanolamin hinzugefügt und bei 85°C gerührt, bis keine Isocyanatgruppen mehr nachweisbar waren.
Das erhaltene Produkt wurde mit Methylisobutylketon auf eine Wirkstoffkonzentration von 36,2 Gew% verdünnt.
Zu 1333 g einer so hergestellten Polyurethanlösung wurden zwecks Herstellung einer Komponente D 65,1 g Butanonoxim und 231 g Desmodur L 75 (freie Isocyanatgruppen enthaltendes Polyurethan der Firma Bayer) zugegeben. Die Mischung wurde bei 60°C gerührt, bis keine freien NCO-Gruppen mehr nachweisbar waren (ca. 20 Minuten).

b) Herstellung einer nichtionogenen, wäßrigen Dispersion, die eine Komponente B und eine Komponente D enthält.

200 g der gemäß Beispiel 2a hergestellten Mischung, die eine Komponente B und eine Komponente D enthielt, wurden unter starkem Rühren einer Lösung von 8,8 g eines ethoxilierten (10 EO) Isotridecanols und 11,8 g 1,2-Propylenglykol in 268 g Wasser bei 65°C hinzugefügt. Der pH-Wert der erhaltenen Mischung wurde mit Salzsäure auf 2,8 eingestellt, und die Dispersion wurde bei 65°C einer Hochdruckhomogenisierung unterworfen. Nach Entfernen von 203 g eines Lösungsmittel/Wasser-Gemischs bei 70°C unter vermindertem Druck (270 - 350 mbar) blieben 269 g einer Dispersion einer Konzentration von 32,4 % zurück, die mit Wasser auf eine Konzentration von 25,2 % verdünnt wurde. Man erhielt eine milchige, schwach gelbliche Dispersion (= "Dispersion 2").

Beispiel 3

Herstellung einer erfindungsgemäßen Zusammensetzung durch Vereinigung einer wäßrigen Dispersion von Komponente A mit einer getrennt hergestellten wäßrigen Dispersion von Komponente B.
167,3 g einer gemäß Beispiel 1b, hergestellten wäßrigen Dispersion (Dispersion 1) wurden mit 132,7 g einer gemäß Beispiel 2b hergestellten wäßrigen Dispersion (Dispersion 2) vereinigt. So wurden 300 g einer "Dispersion 3" erhalten.

Beispiel 4

Herstellung einer erfindungsgemäßen Zusammensetzung durch gemeinsame Dispergierung einer Komponente A, einer Komponente B und einer Komponente D.

Gemäß dem in Anspruch 11 angegebenen Verfahren wurde eine wäßrige Dispersion ("Dispersion 4") folgendermaßen hergestellt:

Eine Lösung von 57,2 g eines nach Beispiel 1a hergestellten Esters (Komponente A) in 72,8 g Methyl-isobutylketon, die eine Temperatur von etwa 70°C besaß, wurde mit 295,5 g einer Lösung, die gemäß Beispiel 2a hergestellt worden war, gut vermischt. Diese zweite Lösung besaß eine Temperatur von etwa 65°C und enthielt neben 165,5 g Methyl-isobutylketon 130 g des bei der Umsetzung nach Beispiel 2a entstehenden Produktgemischs (das die Komponenten B und D enthielt).
Die so hergestellte Lösung der Komponenten A, B und D in Methyl-isobutylketon wurde unter intensivem Rühren einer Lösung von 15,3 g 1,2-Propylenglykol und 11,5 g ethoxiliertem Alkohol in 281 g Wasser zugefügt. Der ethoxilierte Alkohol war der gleiche wie in den Beispielen 1b und 2b. Anschließend wurde mit Salzsäure der pH-Wert auf 2,7 eingestellt und die entstandene Dispersion einer Hochdruckhomogenisierung unterworfen. Nach Abdestillieren des

Methylisobutyketons und Verdünnung mit Wasser auf eine Konzentration von 25,5 % erhielt man Dispersion 4, eine milchige, schwach gelbliche Dispersion.

Ausrüstversuche

Mit Flotten, welche jeweils eine der Dispersionen 1, 2, 3 und 4 enthielten, wurden Textilgewebe behandelt. Die in den Beispielen 3 und 4 erhaltenen Dispersionen 3 und 4 enthielten sowohl eine Komponente A als auch eine Komponente B und stellten somit erfindungsgemäße Zusammensetzungen dar. Die Dispersion 1 gemäß Beispiel 1b und die Dispersion 2 gemäß Beispiel 2b dagegen enthielten jeweils nur eine der Komponenten A oder B und waren somit keine erfindungsgemäßen Zusammensetzungen, sondern dienten zu Vergleichszwecken. Dispersion 3 war nach dem Verfahren der getrennten Dispergierung der Komponenten A und B und Vereinigung der getrennt hergestellten wäßrigen Dispersionen hergestellt, Dispersion 4 nach dem besonders bevorzugten Verfahren der gemeinsamen Dispergierung.

Die Flotten, welche für die nachfolgenden Ausrüstbeispiele 5 bis 8 verwendet wurden, enthielten jeweils 1 g/l 60 %ige Essigsäure, 5 g/l eines Netzmittels (in allen Beispielen das gleiche Netzmittel, das neben ca. 97 % Wasser 3 % eines Gemischs ethoxilierter Produkte enthielt) und die nachfolgend angegebenen Mengen an Dispersion 1, 2, 3 oder 4.

Beispiel 5 (nicht erfindungsgemäß)

Ausrüstflotte 5 mit 50 g/l Dispersion 1

Beispiel 6 (nicht erfindungsgemäß)

Ausrüstflotte 6 mit 75,8 g/l Dispersion 2

Beispiel 7 (erfindungsgemäß)

Ausrüstflotte 7 mit 57,6 g/l Dispersion 3

Beispiel 8 (erfindungsgemäß)

Ausrüstflotte 8 mit 50 g/l Dispersion 4

Die Unterschiede in den Mengen an Dispersionen 1 bis 4, die in den Flotten 5 bis 8 enthalten waren, beruhen darauf, daß die Flotten so eingestellt wurden, daß alle den gleichen Gehalt an Fluor (in Gew%) aufwiesen, nämlich 4,55 Gew% F, damit die Effekte der Öl- und Wasserabweisung auf den Textilien besser miteinander verglichen werden konnten.

Mit jeder der Flotten 5 bis 8 wurden 4 verschiedene Gewebearten behandelt. Die Applikation erfolgte jeweils mittels Foulard-Verfahren. Die Aufnahme an Flotte war von Gewebe zu Gewebe verschieden, während von Flotte zu Flotte kaum Unterschiede auftraten. Die Flottenaufnahme in % Gewichtszunahme (bezogen auf unbehandeltes Gewebegewicht) nach dem Abquetschen ist unten für jede Gewebeart angegeben.

Jede Gewebeprobe wurde nach dem Foulardieren 15 Minuten bei 110°C getrocknet und anschließend 5 Minuten bei 150°C kondensiert.

Die vier Gewebearten waren:

Gewebe a): 100 % Baumwolle Flottenaufnahme nach Foulard und Abquetschen: 90 %

Gewebe b): Baumwolle/Polyacrylnitril/Viskose 70:20:10 Flottenaufnahme: 85 %

Gewebe c): 100 % Polyacrylnitril Flottenaufnahme: 100 %

Gewebe d): Polyester/Wolle 70:30 Flottenaufnahme: 80 %

An den Gewebeproben wurden nach der oben angegebenen Behandlung die wasserabweisende Wirkung und die ölabweisende Wirkung nach den unten genannten Methoden bestimmt. Im Fall der ölabweisenden Wirkung erfolgte eine Bestimmung einerseits direkt an dem Gewebe, wie es nach der oben beschriebenen Behandlung erhalten wurde (die zugehörigen Daten sind in der unten angegebenen Tabelle mit "Original" bezeichnet) sowie nach 5maligem und nach 10maligem Abriebvorgang. Die Ermittlung der ölabweisenden Wirkung nach Abriebvorgängen erlaubt eine

Aussage über die Permanenz der Ölabweisung nach Gebrauch bzw. nach mechanischer Beanspruchung des Textils. Die Beanspruchung der ausgerüsteten Gewebeproben durch Abriebvorgänge erfolgte mittels eines Crockmeters, wie es in der AATCC-Testmethode 8-1996 (entspricht ISO 105 - X 12) angegeben ist. In dieses Crockmeter wurde Schmirgelpapier eingelegt. Mit diesem Gerät wurden die Gewebeproben 5 mal bzw. 10 mal einer Abriebbeanspruchung unterworfen. Nach diesen Beanspruchungen erfolgte wieder eine Bestimmung der ölabweisenden Eigenschaften.

Zur Ermittlung der Ölabweisung wurde die AATCC-Testmethode 118-1997 (entsprechend ISO 14419) verwendet. Sie beruht auf dem Verhalten des ausgerüsteten Gewebes gegenüber der Benetzung durch eine Reihe von flüssigen Kohlenwasserstoffen unterschiedlicher Oberflächenspannungen. Die Bewertung der ölabweisenden Wirkung erfolgt durch eine Zahl, wobei eine höhere Zahl eine effektivere Ölabweisung bedeutet.

Die wasserabweisende Wirkung der ausgerüsteten Gewebe wurde mittels des Spray-Tests durchgeführt, der in der AATCC-Testmethode 22-1996 (entsprechend ISO 4920) beschrieben ist. Hierbei wird die Benetzung der Gewebeprobe durch aufgesprühtes Wasser visuell beurteilt. Die effektivste Wasserabweisung entspricht der Note 100, die geringste der Note 0. In der unten aufgeführten Tabelle sind beim Spray-Test jeweils 3 Noten angegeben, die den Bewertungen dreier aufeinanderfolgender Spraytests (ohne zwischenzeitliche Trocknung der Gewebe) entsprechen.

Die nachfolgende Tabelle zeigt die Ergebnisse der Tests.
Der Tabelle ist zu entnehmen, daß die erfindungsgemäßen Beispiele 7 und 8 insgesamt gesehen zu besseren Ergebnissen führen als die Beispiele 5 und 6.

Tabelle

| | Gewebe a | | | | Gewebe b | | | | Gewebe c | | | | Gewebe d | | | |
|---|---|---|---|---|---|---|---|---|---|---|---|---|---|---|---|---|
| | Flotte / Beispiel | | | | Flotte / Beispiel | | | | Flotte / Beispiel | | | | Flotte / Beispiel | | | |
| | 5 | 6 | 7 | 8 | 5 | 6 | 7 | 8 | 5 | 6 | 7 | 8 | 5 | 6 | 7 | 8 |
| Ölabweisung | | | | | | | | | | | | | | | | |
| Original | 6 | 6 | 6 | 6 | 6 | 6 | 6 | 6 | 4 | 4 | 5 | 5 | 0 | 3 | 3 | 4 |
| nach 5 mal Abrieb | 5 | 3-4 | 6 | 6 | 5 | 4 | 6 | 6 | 3-4 | 4 | 5 | 5 | 0 | 3 | 3 | 3-4 |
| nach 10 mal Abrieb | 5 | 3-4 | 5 | 5-6 | 5 | 4 | 5 | 5-6 | 4 | 3 | 5 | 5 | 0 | 2-3 | 3 | 3-4 |
| | 70 | 80 | 80 | 80 | 50 | 100 | 100 | 100 | 50 | 100 | 90 | 100 | 50 | 90 | 80 | 90 |
| Wasserabweisung | 50 | 80 | 80 | 80 | 50 | 100 | 100 | 100 | 50 | 100 | 80 | 90 | 50 | 80 | 80 | 80 |
| Spray-Test | 50 | 80 | 70 | 70 | 50 | 100 | 90 | 100-90 | 50 | 90 | 80 | 90 | 50-0 | 80 | 70 | 80 |

## Patentansprüche

1. Zusammensetzung, welche eine Komponente A und eine Komponente B enthält, wobei Komponente A ein Ester ist, der erhältlich ist durch Umsetzung einer Dicarbonsäure oder eines Gemischs von Dicarbonsäuren der Formel (I)

$$HOOC-(CH\,R)_a-COOH \qquad (I)$$

mit einem Diol oder einem Gemisch von Diolen der Formel (II), (III), (IV), (V) und/oder (VI)

$$[R_F-(CH_2)_b-(X-CH_2)_c]_2\ C(CH_2OH)_2 \qquad (II)$$

$$HO-CH_2-CRR'-(X)_d-CRR'-CH_2OH \qquad (III)$$

$$HO-(CH_2)_e-(SiR_2-O)_f-SiR_2-(CH_2)_e-OH \qquad (IV)$$

$$HO-CH_2CH_2-N\,R''-CH_2CH_2OH \qquad (V)$$

$$HO-(CHR)_t-(CHR-CHR-O)_g-CHR-CHR-OH \qquad (VI)$$

wobei mindestens ein Diol der Formel (II) oder der Formel (III) an der Umsetzung beteiligt ist, und wobei Komponente B ein Oligourethan oder ein Polyurethan ist, das erhältlich ist durch Umsetzung eines Diols oder eines Gemischs von Diolen der Formel (II), (III), (IV), (V), (VI) oder (VII)

$$(\,(HO-CH_2)_3\ C-CH_2-CH_3 \qquad (VII)$$

mit einem Diisocyanat oder einem Gemisch von Diisocyanaten der Formel (VIII)

$$OCN-R'''-NCO \qquad (VIII)$$

wobei alle Reste R unabhängig voneinander für Wasserstoff oder einen Alkylrest mit 1 bis 4 C-Atomen stehen,
a für eine Zahl von 2 bis 10, vorzugsweise von 2 bis 6,
b für eine Zahl von 1 bis 4,
c für 0 oder 1,
d für 0 oder 1,
$R_F$ für $CF_3(CF_2)_h$,
h für eine Zahl von 3 bis 15, vorzugsweise von 7 bis 11,
R' für $(CH_2)_b$ $R_F$ steht, wenn d=1 ist und für $-X(CH_2)_b$ $R_F$ steht, wenn d=0 ist,
e für eine Zahl von 1 bis 4,
f für eine Zahl von 10 bis 50,
g für eine Zahl von 0 bis 6,
t für eine Zahl von 0 bis 8,
X für -O-, -S-, -NR- oder -PR-, vorzugsweise für -S-,
R'' für R oder $-CH_2CH_2OH$
und
R''' für einen zweiwertigen aliphatischen oder cycloaliphatischen Rest mit 4 bis 40 C-Atomen steht oder für einen zweiwertigen aromatischen Rest der Formel

$$-C_6H_3(R)-\ oder\ -C_6H_3(R)-CH_2-C_6H_3(R)-$$

wobei $C_6H_3$ für den dreiwertigen, von Benzol abgeleiteten Rest steht, wobei für den Fall, daß das Umsetzungsprodukt aus Diol und Diisocyanat noch Isocyanatgruppen enthält, diese Isocyanatgruppen gegebenenfalls blokkiert werden.

**2.** Zusammensetzung nach Anspruch 1, dadurch gekennzeichnet, daß Komponente A erhältlich ist durch Umsetzung von Dicarbonsäure oder Dicarbonsäuregemisch mit Diol oder Diolgemisch in einem solchen Verhältnis, daß pro Mol -COOH-Gruppen insgesamt 0,9 bis 1,1 Mol alkoholische OH-Gruppen eingesetzt werden, wobei 50 bis 100 % der Anzahl dieser OH-Gruppen aus einem Diol der Formel (II) und/oder der Formel (III) stammen.

**3.** Zusammensetzung nach Anspruch 1 oder 2, dadurch gekennzeichnet, daß Komponente B erhältlich ist durch Umsetzung von Diol oder Diolgemisch mit Diisocyanat oder Diisocyanatgemisch in einem solchen Verhältnis, daß pro Mol alkoholischer OH-Gruppe 0,9 bis 1,1 Mol -NCO-Gruppen eingesetzt werden und daß alle nach der Umsetzung noch vorliegenden Isocyanatgruppen mit einem Ketonoxim, vorzugsweise Butanonoxim, Acetonoxim oder Methyl-isobutylketonoxim blockiert werden.

**4.** Zusammensetzung nach einem oder mehreren der Ansprüche 1 bis 3, dadurch gekennzeichnet, daß sie eine wäßrige Dispersion ist, die neben den Komponenten A und B noch einen Dispergator, bevorzugt einen nichtionogenen Dispergator, oder ein Gemisch von Dispergatoren, bevorzugt nichtionogenen Dispergatoren, enthält.

**5.** Zusammensetzung nach einem oder mehreren der Ansprüche 1 bis 4, dadurch gekennzeichnet, daß sie zusätzlich eine oder mehrere der Komponenten C, D und 1,2 Propylenglykol enthält, wobei Komponente C ein Acrylsäure- oder Methacrylsäure-homopolymer oder -copolymer ist, das einen oder mehrere Reste $R_F$ enthält, wobei $R_F$ die in Anspruch 1 genannte Bedeutung besitzt und wobei Komponente D ein Diisocyanat oder Polyisocyanat ist, dessen -NCO-Gruppen blockiert, vorzugsweise mit einem Ketonoxim blockiert, sind.

**6.** Zusammensetzung nach einem oder mehreren der Ansprüche 1 bis 5, dadurch gekennzeichnet, daß das Gewichtsverhältnis von Komponente A zu Komponente B im Bereich von 1:1 bis 5:1 liegt.

**7.** Zusammensetzung nach einem oder mehreren der Ansprüche 4 bis 6, dadurch gekennzeichnet, daß sie

5 bis 50 Gewichts% an Komponente A, insbesondere 5 bis 25 Gew%
3 bis 40 Gewichts% an Komponente B, insbesondere 5 bis 25 Gew%
0 bis 30 Gewichts% an Komponente C, insbesondere 3 bis 20 Gew%
0 bis 20 Gewichts% an Komponente D, insbesondere 3 bis 15 Gew%
0,5 bis 10 Gewichts% an Dispergator oder Dispergatorgemisch
0 bis 20 Gewichts% an 1,2-Propylenglykol enthält.

**8.** Zusammensetzung nach einem oder mehreren der Ansprüche 1 bis 7, dadurch gekennzeichnet, daß Komponente A ein Ester ist, der erhältlich ist durch Umsetzung von Adipinsäure mit einem Diolgemisch der Formel (II), worin b=2, c=1, X= -S- und $R_F = CF_3(CF_2)_h$, wobei h für die einzelnen Diole des Gemischs Werte von 7 bis 11 besitzt.

**9.** Zusammensetzung nach einem oder mehreren der Ansprüche 1 bis 8, dadurch gekennzeichnet, daß Komponente B ein Oligourethan oder Polyurethan ist, das erhältlich ist durch Umsetzung eines Diols der Formel (II) mit einem Diisocyanat der Formel OCN-R'''-NCO, worin R''' ein linearer oder verzweigter Alkylenrest mit 6 - 12 C-Atomen ist, in solchen Mengen, daß das entstehende Umsetzungsprodukt keine freien -NCO-Gruppen, aber freie OH-Gruppen besitzt, anschließend weiterer Umsetzung mit einem cycloaliphatischen Diisocyanat mit 10 bis 40 C-Atomen in solchen Mengen, daß das entstehende Umsetzungsprodukt freie NCO-Gruppen aufweist, und anschließend Umsetzung mit einem Diol der Formel (V) in solchen Mengen, daß das entstehende Umsetzungsprodukt (Komponente B) keine freien NCO-Gruppen aufweist.

**10.** Zusammensetzung nach einem oder mehreren der Ansprüche 4 bis 9, dadurch gekennzeichnet, daß sie als nichtionischen Dispergator einen ethoxilierten Alkohol oder ein Gemisch ethoxilierter Alkohole der Formel $R^1-O(CH_2CH_2O)_nH$ enthält, worin $R^1$ ein linearer oder verzweigter Alkylrest mit 6 bis 22 C-Atomen und n eine Zahl von 4 bis 14 ist.

**11.** Verfahren zur Herstellung einer Zusammensetzung nach einem oder mehreren der Ansprüche 4 bis 10, dadurch gekennzeichnet, daß man eine Mischung aus den Komponenten A und B herstellt, welche gegebenenfalls noch zusätzlich ein organisches Lösungsmittel und/oder eine Komponente D enthält, diese Mischung unter Verwendung

eines nichtionogenen Dispergators oder Dispergatorgemischs ohne Verwendung eines anionischen oder kationischen Dispergators in Wasser dispergiert und anschließend gegebenenfalls das organische Lösungsmittel entfernt und gegebenenfalls weitere Komponenten hinzufügt.

**12.** Verfahren nach Anspruch 11, dadurch gekennzeichnet, daß die Mischung die Komponenten A und B in solchen Mengen enthält, daß das Gewichtsverhältnis A : B im Bereich von 1:1 bis 5:1 liegt.

**13.** Verfahren nach Anspruch 11 oder 12, dadurch gekennzeichnet, daß man die Mischung in einer solchen Menge dispergiert, daß die Zusammensetzung 10 bis 50 Gew% insbesondere 10 - 35 Gew% an der Summe der Komponenten A und B enthält, bezogen auf das Gesamtgewicht der Zusammensetzung ohne organisches Lösungsmittel.

**14.** Verfahren nach einem oder mehreren der Ansprüche 11 bis 13, dadurch gekennzeichnet, daß als nichtionogener Dispergator ein ethoxilierter Alkohol der Formel $R^1\text{-}O\text{-}(CH_2CH_2O)_n\text{-}H$ oder ein Gemisch solcher Alkohole verwendet wird, wobei $R^1$ und n die in Anspruch 10 genannten Bedeutungen besitzen.

**15.** Zusammensetzung, erhältlich nach einem Verfahren gemäß einem oder mehreren der Ansprüche 11 bis 14.

**16.** Verwendung einer Zusammensetzung nach einem oder mehreren der Ansprüche 1 bis 15 zur Behandlung von Fasermaterialien, insbesondere textilen Flächengebilden.

**17.** Verwendung nach Anspruch 16, dadurch gekennzeichnet, daß die Fasermaterialien zu 50 bis 100 Gew% aus synthetischen Polymeren, insbesondere aus Polyester, Polyacrylnitril und/oder Polyamid und zu 0 bis 50 Gew% aus nativen Fasern, insbesondere Cellulose, bestehen.

Europäisches Patentamt

# EUROPÄISCHER RECHERCHENBERICHT

Nummer der Anmeldung
EP 99 11 9417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 41 13 891 A (BAYER AG) 29. Oktober 1992 (1992-10-29) * Seite 2, Zeile 38 - Seite 6, Zeile 11; Ansprüche * | 1-4,6 | C09D167/00 C08L67/00 |
| A | EP 0 113 217 A (MINNESOTA MINING & MFG) 11. Juli 1984 (1984-07-11) * Ansprüche * | 1 | |
| A | EP 0 690 039 A (CIBA GEIGY AG) 3. Januar 1996 (1996-01-03) * Ansprüche * | 1 | |

RECHERCHIERTE SACHGEBIETE (Int.Cl.7)
C09D
C08L
D06M

Der vorliegende Recherchenbericht wurde für alle Patentansprüche erstellt

| Recherchenort | Abschlußdatum der Recherche | Prüfer |
|---|---|---|
| DEN HAAG | 25. April 2000 | Hellemans, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 99 11 9417

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-04-2000

| Im Recherchenbericht angeführtes Patentdokument | Datum der Veröffentlichung | Mitglied(er) der Patentfamilie | Datum der Veröffentlichung |
|---|---|---|---|
| DE 4113891 A | 29-10-1992 | KEINE | |
| EP 0113217 A | 11-07-1984 | AU 2297283 A | 05-07-1984 |
| | | BR 8307275 A | 07-08-1984 |
| | | JP 59135219 A | 03-08-1984 |
| | | ZA 8309715 A | 28-08-1985 |
| EP 0690039 A | 03-01-1996 | US 5491261 A | 13-02-1996 |
| | | CA 2152979 A | 02-01-1996 |
| | | JP 8081404 A | 26-03-1996 |
| | | US 5525732 A | 11-06-1996 |
| | | US 5663273 A | 02-09-1997 |

EPO FORM P0461

Für nähere Einzelheiten zu diesem Anhang : siehe Amtsblatt des Europäischen Patentamts, Nr.12/82